(19)

Europäisches
Patentamt
European
Patent Office
Office européen
des brevets

(11) **EP 1 858 180 B1**

(12) **EUROPEAN PATENT SPECIFICATION**

(45) Date of publication and mention
of the grant of the patent:
**20.05.2009 Bulletin 2009/21**

(51) Int Cl.:
*H04B 17/00* (2006.01)   *H04B 7/04* (2006.01)

(21) Application number: **06011527.6**

(22) Date of filing: **02.06.2006**

(54) **System and method for testing and simulating channels in a MIMO mobile radio system**

System und Verfahren zum Prüfen und Simulieren von Kanälen in einem Mobilkommunikationssystem

Système et procédé pour l'essai et la simulation de canaux dans un système de radiocommunications mobiles

(84) Designated Contracting States:
**DE GB**

(30) Priority: **19.05.2006 EP 06010388**

(43) Date of publication of application:
**21.11.2007 Bulletin 2007/47**

(73) Proprietor: **Rohde & Schwarz GmbH & Co. KG
81671 München (DE)**

(72) Inventors:
• **Mellein, Heinz
85540 Haar (DE)**
• **Albrecht, Philipp
83024 Rosenheim (DE)**

(74) Representative: **Körfer, Thomas et al
Mitscherlich & Partner
Patent- und Rechtsanwälte
Postfach 33 06 09
80066 München (DE)**

(56) References cited:
EP-A- 1 447 927        US-A1- 2003 050 020
US-A1- 2004 171 385

• **KOLU J ET AL: "A real-time simulator for MIMO radio channels" WIRELESS PERSONAL MULTIMEDIA COMMUNICATIONS, 2002. THE 5TH INTERNATIONAL SYMPOSIUM ON OCT. 27-30, 2002, PISCATAWAY, NJ, USA,IEEE, vol. 2, 27 October 2002 (2002-10-27), pages 568-572, XP010619152 ISBN: 0-7803-7442-8**

**Description**

The invention refers to a channel simulator and a method for simulating at least one channel in a MIMO mobile radio system.

Future mobile radio systems are realised as multiple-input-multiple output (MIMO) systems comprising multiple transmitter antennas at the base stations and multiple receiver antennas at the mobile stations. Therefore between each of these multiple transmitter antennas and each of these receiver antennas a transmission channel is built up enabling to transmit multiple data streams in total or to transmit the identical data stream on each transmission channel for redundancy reason. MIMO mobile radio systems are used for increasing the data rate in the transmission and for achieving a higher robustness of the transmission against interferences, fading, distortion and so on. Such a MIMO mobile radio system is described in WO 03/005606 A1 for example.

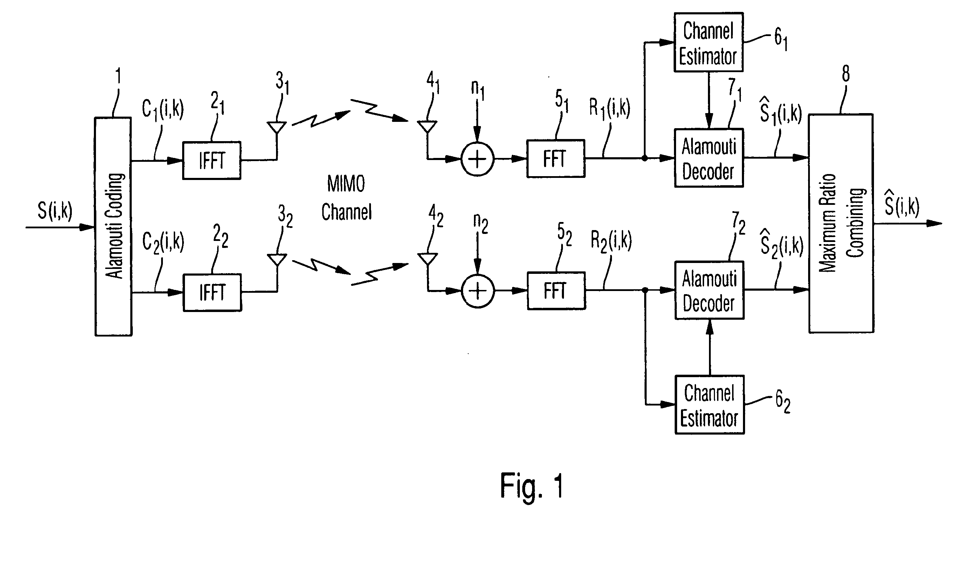

The simplified block diagram of a space-time coded MIMO radio system using orthogonal frequency division modulation (OFDM) with two transmitter and two receiver antennas is shown in Fig. 1.

The QPSK modulated signal S(i,k) - index i indicates the time, index k indicates the OFDM subcarrier - is space-time coded in an Alamouti coder 1. Corresponding to Alamouti, S.M.: "A Simple Transmit Diversity Technique for Wireless Communications", in IEEE Journal on Selected Areas in Communications, 16(8), page 1451-1458, October 1998, two consecutive QPSK modulated symbols S(i,k) are combined to a transmitter vector by means of an Almamouti coding-matrix. For OFDM modulation the first element $C_1(i,k)$ of this transmitter vector as symbol is cyclically prefixed with a guard interval and fed to a first Inverse-Fast-Fourier-Transformer $2_1$. The first OFDM modulated transmitter signal is transmitted by means of first transmitter antenna $3_1$. The second element $C_2(i,k)$ of this transmitter vector as symbol is also cyclically prefixed with a guard interval and fed to a second Inverse-Fast-Fourier-Transformer $2_2$ and transmitted as second OFDM modulated transmitter signal by means of second transmitter antenna $3_1$.

After transmission over the different transmission channels the first received signal superposed with a noise signal $n_1$ is fed from the first receiving antenna $4_1$ to the first Fast-Fourier-Transformer $5_1$ performing OFDM demodulation to get the first receiving signal $R_1(i,k)$. The second received signal superposed with a noise signal $n_2$ is fed from the second receiving antenna $4_2$ to the second Fast-Fourier-Transformer $5_2$ performing OFDM demodulation to get the second receiving signal $R_2(i,k)$.

Using pilot symbols in the transmitted OFDM signal, which are known for the receiver, the two sub channels - channel from first transmitter antenna $3_1$ to first receiving antenna $4_1$ and channel from second transmitter antenna $3_2$ to first receiving antenna $4_1$ - can be estimated by means of first channel estimator $6_1$. With the estimated channel parameters the first receiving signal $R_1(i,k)$ is space-time coded and equalised at the same time by means of the first Alamouti decoder $7_1$. By means of the second channel estimator $6_2$ the other two sub channels - channel from first transmitter antenna $3_1$ to second receiving antenna $4_2$ and channel from second transmitter antenna $3_2$ to second receiving antenna $4_2$ - are estimated. With the estimated channel parameters the second receiving signal $R_2(i,k)$ is space-time coded and equalised at the same time by means of the second Alamouti decoder $7_2$. The two decoded receiving signals $\hat{S}_1(i,k)$ and $\hat{S}_2(i,k)$ are combined to a receiving signal $\hat{S}(i,k)$ in a maximum ratio combiner 8 to exploit receive diversity and to decrease the noise level in the receiving signal.

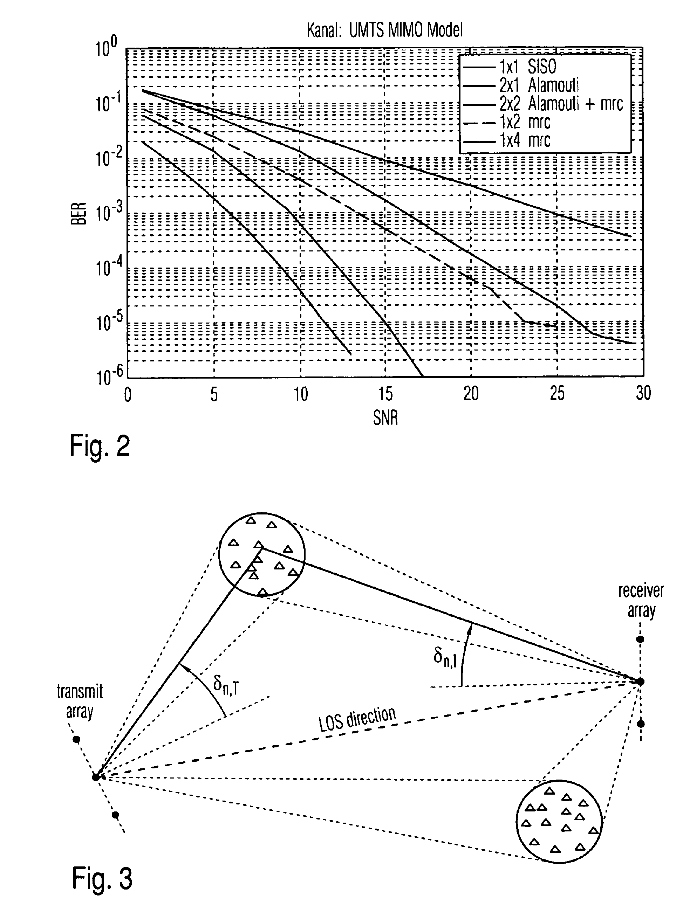

For comparison in Fig. 2 the bit error rate (BER) over the signal to noise ratio (SNR) is shown for several MIMO transmission systems. The BER can be reduced by replacing a SISO transmission system by means of a 2x1 transmission system using Alamouti coding via transmitter diversity. A further reduction of the BER can be achieved by replacing the 2x1 transmission system by means of a 2x2 transmission system using maximum ratio combining via receiver diversity. Combining transmitter diversity and receiver diversity by means of Alamouti coding and maximum ratio combining in a 2x2 mobile radio system results in a further decrease of the BER. The best BER value are obtained by means of a 1x4 transmission with four receiver antennas using maximum ratio combining.

Under the assumption that the length of the channel impulse response is shorter than the cyclic prefix the receiving signals $R_1(i,k)$ and $R_2(i,k)$ can be determined according to equation (1).

$$R_v(i,k) = \sum_{\mu=1}^{2} H_{v,\mu}(i,k) \cdot C_\mu(i,k) + \tilde{n}_v(i,k) \qquad (1)$$

The time-discrete element $H_{v,\mu}(i,k)$ corresponds to the analogue impulse response $h_{v,\mu}(\tau,t)$ of the transmission between transmitter antenna $v$ and receiver antenna $\mu$ according to equation (2).

$$h_{v,\mu}(\tau,t) = \sum_{p=1}^{P} \alpha_{v,\mu,p}(t) \cdot \delta(t - \tau_p) \qquad (2)$$

The impulse response $h_{v,\mu}(\tau,t)$ comprises all the impulse responses $\alpha_{v,\mu,p}(t) \cdot \delta(t\text{-}\tau_p)$ caused by multi path transmission over several sub channels. Each sub channel $p$ is characterised by a specific time dependent attenuation $\alpha_{v,\mu,p}(t)$ and by a delay time $\tau_p$ dependent from the position of the scatter cluster relative to the transmitter antenna $v$ and receiver antenna $\mu$ causing a transmission path.

Corresponding to Fig. 3 several reflectors causing an impulse response with similar parameters are combined to one scatter cluster characterised by an angle of departure $\delta_{p,T}$ at the transmitter antenna v, a phase shift and an angle of arrival $\delta_{p,R}$ at the receiver antenna $\mu$.

The impulse responses $h_{v,\mu}(\tau,t)$ between each transmitter antenna $v$ and each receiver antenna $\mu$ are introduced to the channel matrix $H(\tau,t)$ corresponding to equation (3).

$$\widetilde{H}(\tau,t) = \begin{pmatrix} \tilde{h}_{1,1}(\tau,t) & 0 & ... & 0 \\ 0 & \tilde{h}_{2,2}(\tau,t) & ... & 0 \\ \vdots & \vdots & ... & \vdots \\ 0 & 0 & ... & \tilde{h}_{D,D}(\tau,t) \end{pmatrix} \qquad (4)$$

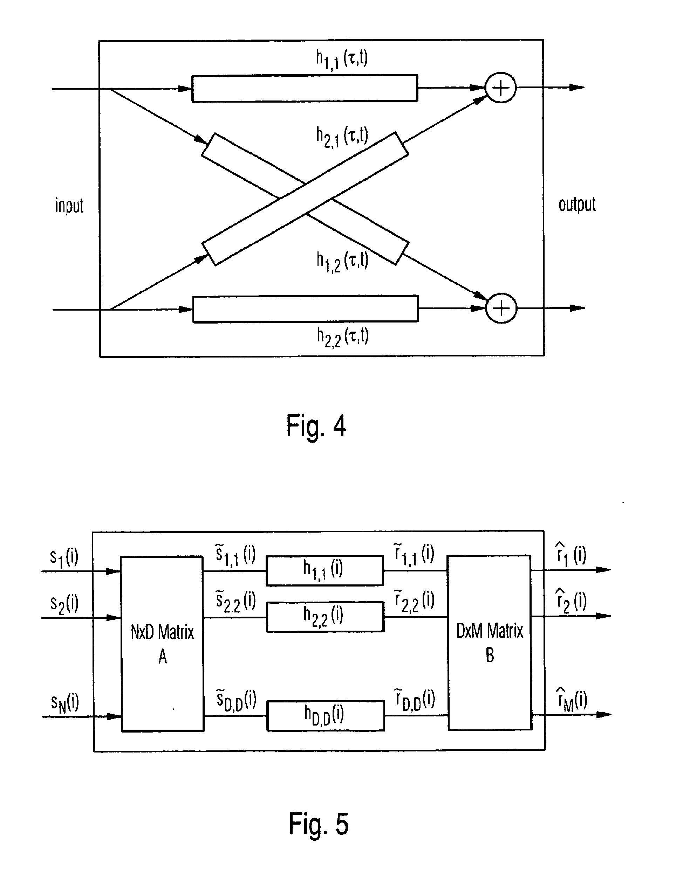

A block diagram of a 2x2 mobile radio system characterised by coupled sub channels is displayed in Fig. 4.

If the number N of transmitter antennas and the number M of receiver antennas is comparable high, the channel matrix $H(\tau,t)$ and the simulation model comprising a lot of impulse responses $h_{v,\mu}(\tau,t)$ to be calculated on the basis of a real time channel simulator disclosed for example in the WO 06/026799 A1 is very complex.

A reduction of this complexity in calculation the impulse responses $h_{v,\mu}(\tau,t)$ can be achieved by singular value decomposition of the channel matrix $H(\tau,t)$. Following the WO 03/005606 A1 disclosing an adaptive MIMO transmission system the channel matrix $H(\tau,t)$ can be decomposed in a diagonal matrix $\widetilde{H}(\tau,t)$ with the singular values $\tilde{h}_{v,v}(\tau,t)$ of the channel matrix $H(\tau,t)$ as diagonal elements according to equation (4) preceded by a matrix $A$ with the corresponding singular vectors and succeeded by a matrix B being the inverse $A^{-1}$ of matrix A according to equation (4) and (5).

$$H(\tau,t) = \begin{pmatrix} h_{1,1}(\tau,t) & h_{1,2}(\tau,t) & ... & h_{1,M}(\tau,t) \\ h_{2,1}(\tau,t) & h_{2,2}(\tau,t) & ... & h_{2,M}(\tau,t) \\ \vdots & \vdots & ... & \vdots \\ h_{N,1}(\tau,t) & h_{N,2}(\tau,t) & ... & h_{N,M}(\tau,t) \end{pmatrix} \qquad (3)$$

$$H(\tau,t) = A \cdot \widetilde{H}(\tau,t) \cdot B \qquad (5)$$

A block diagram of a simulation model for a NxM mobile radio system, whose channel matrix $H(\tau,t)$ is singular-value decomposed according to equation (4) and (5), is shown in Fig. 5.

The simulation model in Fig. 5 comprises D decoupled single-input-single-output (SISO) sub channels characterised by their respective impulse responses $\tilde{h}_{v,v}(\tau,t)$. The number $D$ of decoupled single-input-single-output (SISO) sub channels corresponds to the minimum value of the number N of transmitter antennas or the number M of receiver antennas according to equation (6).

$$D = Min\{N,M\} \qquad (6)$$

In such a way the number of impulse responses $\tilde{h}_{v,v}(\tau,t)$ to be cyclically calculated in a real time channel simulator can be reduced. But the reduction in calculation the impulse responses $\tilde{h}_{v,v}(\tau,t)$ is disadvantageously compensated by the additional calculation of the matrices A and $B$ containing the singular-vectors still being time dependent.

Therefore the objective of the invention is to develop a real time test system or a real time simulation and a method for testing and simulating a MIMO mobile radio system with reduced effort in calculation.

The invention is solved by means of a test system with the features of claim 1 and by means of a method for testing and simulating with the features of claim 10.

Based on the singular-value-decomposition of the channel matrix in the state of the art the MIMO mobile radio system is inventively transformed to a mobile radio system with D decoupled SISO sub channels, a transmitter network A containing only time-independent connections between the N transmitter antennas and the inputs of the D decoupled SISO sub channels and a receiver network B containing only time-independent connections between the outputs of the D decoupled SISO sub channels and the M receiver antennas. Without time dependence the transmitter and receiver networks are only used as configuration networks annexing each of the N transmitter antennas with each of the M receiver antennas via that decoupled SISO sub channel structure having the best fit in the BER over SNR in comparison with the singular-value-decomposed mobile radio system corresponding to equation (5).

In the first step of the inventive solution the MIMO mobile radio system is transformed in several SISO sub channels, whereby the number $D$ of SISO sub channels corresponds to the number of connections between each input and each output of the MIMO mobile radio system. Each of the N transmitter antennas i is connected with at least one of the D inputs of the D SISO sub channels by means of a transmitter network A and each of the D outputs of the D SISO sub channels is connected with one of the M receiver antennas j by means of a receiver network B.

In the second step of the inventive solution a reduced number $\tilde{D}$ of SISO transmission systems is generated by dispatching one of the D SISO sub channels. Simulation results show that the difference in the BER over SNR between such an inventive mobile radio system of decoupled SISO sub channels and a mobile radio system of decoupled SISO sub channels of the state of the art corresponding to equation (5) is less than 2 dB. This inaccuracy, which can be determined for each choice of dispatching one of D SISO sub channels and each choice of configuration of the transmitter and receiver network, is acceptable.

In a first embodiment of the invention the connection from transmitter antenna i to receiver antenna j via the dispatched sub channel is replaced by means of a connection via another not dispatched sub channel connecting the same transmitter antenna i with the same receiver antenna j.

In the transmitter network of the first embodiment of the invention the connection between the transmitter antenna i and the dispatched SISO sub channel is cancelled and a new connection is generated connecting the transmitter antenna i with the input of one of the other $\tilde{D}$ SISO sub channels, whose output is connected with the same receiver antenna j as the output of the dispatched SISO sub channel.

In the receiver network of the first embodiment of the invention the connection between the output of the dispatched SISO sub channel and the receiver antenna j is cancelled and a new connection is generated connecting the output of one of the other $\tilde{D}$ SISO sub channels, whose input is connected with the same transmitter antenna i as the input of the dispatched SISO sub channel, with the receiver antenna j.

In a second embodiment of the invention the connection from transmitter antenna i to receiver antenna j via the dispatched sub channel is replaced by at least two parallel connections via at least two not dispatched sub channel connecting the same transmitter antenna i with the same receiver antenna j.

In the transmitter network of the second embodiment of the invention the connection between the transmitter antenna i and the dispatched SISO sub channel is cancelled and new parallel connections are generated connecting the transmitter antenna i with the inputs of at least two of the other $\tilde{D}$ SISO sub channels, whose outputs are connected with the same receiver antenna j as the output of the dispatched SISO sub channel.

In the receiver network of the second embodiment of the invention the connection between the output of the dispatched SISO sub channel and the receiver antenna j is cancelled and new parallel connections are generated connecting the outputs of at least two of the other $\tilde{D}$ SISO sub channels, whose inputs are connected with the same transmitter antenna i as the input of the dispatched SISO sub channel, with the receiver antenna j.

In a third embodiment of the invention the connection from transmitter antenna i to receiver antenna j via the dispatched sub channel is replaced by a serial concatenation of at least two not dispatched sub channels.

In the transmitter network of the third embodiment of the invention the connection between the transmitter antenna i and the dispatched SISO sub channel is cancelled and new connections are generated connecting the transmitter antenna i with the input of the first of at least two serial concatenated sub channels of the other $\tilde{D}$ SISO sub channels, whereby the output of the last of the serial concatenated sub channels is connected with the same receiver antenna j as the output of the dispatched SISO sub channel.

In the receiver network of the third embodiment of the invention the connection between the output of the dispatched SISO sub channel and the receiver antenna j is cancelled and new parallel connection is generated connecting the output of the last of at least two serial concatenated sub channels of the other $\tilde{D}$ SISO serial concatenated sub channels, whereby the input of the first of the serial concatenated sub channels is connected with the same transmitter antenna i as the input of the dispatched SISO sub channel, with the receiver antenna j.

The fourth embodiment of the invention is a combination of the second and the third embodiment of the invention replacing a connection from transmitter antenna i to receiver antenna j via the dispatched sub channel by a serial and parallel concatenation of at least two not dispatched sub channels.

Embodiments of the inventive channel simulator and the inventive method for simulating are shown in the drawings and are consecutively described in detail. In the drawings:

Fig. 1    shows a block diagram of a MIMO space-time coded OFDM mobile radio system,

Fig. 2    shows a BER diagram for several MIMO mobile radio systems using different types of diversity and numbers of transmitters resp. receiver antennas,

Fig. 3    shows a multi path transmission via scatter clusters,

Fig. 4    shows a block diagram of a simulator for a 2x2 mobile radio system with coupled sub channels,

Fig. 5    shows a block diagram of a simulator for a NxM mobile radio system with decoupled sub channels,

Fig. 6    shows a block diagram of a first embodiment of an inventive simulator for a 2x2 mobile radio system with a reduced number of decoupled sub channels,

Fig. 7    shows a block diagram of a second embodiment of an inventive simulator for a 2x2 mobile radio system with a reduced number of decoupled sub channels,

Fig. 8    shows a block diagram of a third embodiment of an inventive simulator for a 2x2 mobile radio system with a reduced number of decoupled sub channels and

Fig. 9    shows a BER diagram of the first embodiment of the inventive simulator for several MIMO mobile radio systems using different types of diversity and numbers of transmitter resp. receiver antennas.

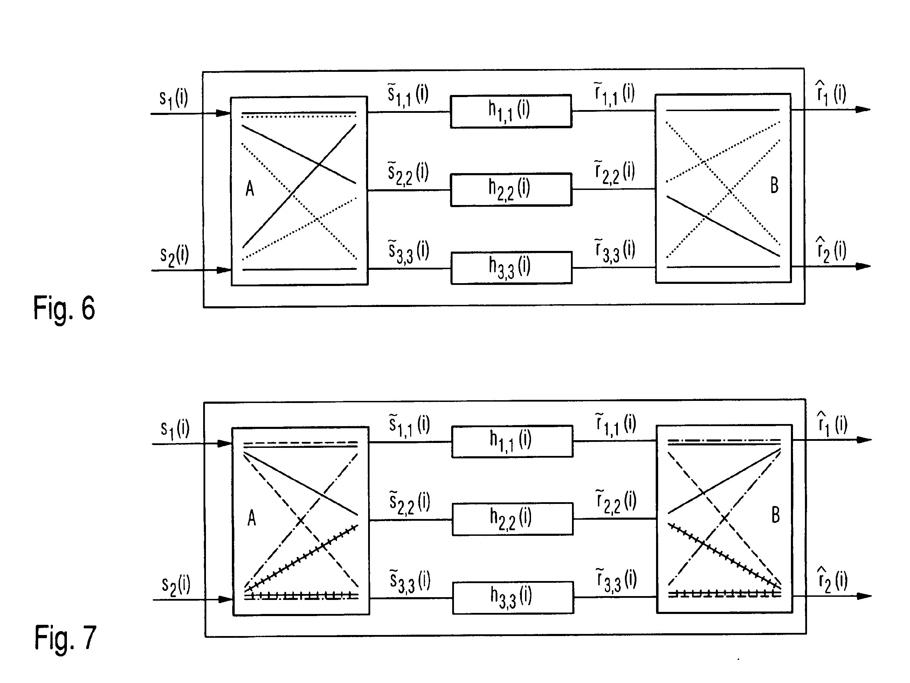

In Fig. 6 a block diagram of a first embodiment of an inventive real time simulator for simulating a mobile radio system between 2 transmitter antennas and 2 receiver antennas is shown.

Exemplary the SISO sub channel with the impulse response $\tilde{h}_{4,4}(\tau,t)$ is dispatched in the block diagram in Fig. 6. The other SISO sub channels with the respective impulse responses $\tilde{h}_{1,1}(\tau,t)$, $\tilde{h}_{2,2}(\tau,t)$ or $\tilde{h}_{3,3}(\tau,t)$ can be alternatively dispatched without any significant loss in the BER over SNR equivalently to the dispatch of the SISO sub channel with the impulse response $\tilde{h}_{4,4}(\tau,t)$.

For connecting the first transmitter antenna with the first receiver antenna the transmitter network A connects the first transmitter antenna (signal $s_1(i)$) with the input of the sub channel with the impulse response $\tilde{h}_{1,1}(\tau,t)$ (signal $\tilde{s}_{1,1}(i)$) and the receiver network B connects the output of the sub channel with the impulse response $\tilde{h}_{1,1}(\tau,t)$ (signal $\tilde{r}_{1,1}(i)$) with the first receiver antenna (signal $\tilde{r}_1(i)$). Alternatively - dotted lines - for connecting the first transmitter with the first receiver antenna the transmitter network A connects the first transmitter antenna (signal $s_1(i)$) with the input of the sub channel with the impulse response $\tilde{h}_{3,3}(\tau,t)$ (signal $\tilde{s}_{3,3}(i)$) and the receiver network B connects the output of the sub channel with the impulse response $\tilde{h}_{3,3}(\tau,t)$ (signal $\tilde{r}_{3,3}(i)$) with the first receiver antenna (signal $\hat{r}_1(i)$).

For connecting the first transmitter antenna with the second receiver antenna the transmitter network A connects the first transmitter antenna (signal $s_1(i)$) with the input of the sub channel with the impulse response $\tilde{h}_{2,2}(\tau,t)$ (signal $\tilde{s}_{2,2}(i)$) and the receiver network B connects the output of the sub channel with the impulse response $\tilde{h}_{2,2}(\tau,t)$ (signal $\tilde{r}_{2,2}(i)$) with the second receiver antenna (signal $\tilde{r}_2(i)$). Alternatively - dotted lines - for connecting the first transmitter with the second receiver antenna the transmitter network A connects the first transmitter antenna (signal $s_1(i)$) with the input of the sub channel with the impulse response $\tilde{h}_{1,1}(\tau,t)$ (signal $\tilde{s}_{1,1}(i)$) and the receiver network B connects the output of the sub channel with the impulse response $\tilde{h}_{1,1}(\tau,t)$ *(signal $\tilde{r}_{2,2}(i)$) with the second receiver antenna (signal $\hat{r}_2(i)$).

For connecting the second transmitter antenna with the first receiver antenna the transmitter network A connects the second transmitter antenna (signal $s_2(i)$) with the input of the sub channel with the impulse response $\tilde{h}_{1,1}(\tau,t)$ (signal $\tilde{s}_{1,1}(i)$) and the receiver network B connects the output of the sub channel with the impulse response $\tilde{h}_{1,1}(\tau,t)$ (signal $\tilde{r}_{1,1}(i)$) with the first receiver antenna (signal $\hat{r}_1(i)$). Alternatively - dotted lines - for connecting the second transmitter with the first receiver antenna the transmitter network A connects the second transmitter antenna (signal $s_2(i)$) with the input of the sub channel with the impulse response $\tilde{h}_{2,2}(\tau,t)$ (signal $\tilde{s}_{2,2}(i)$) and the receiver network B connects the output of the sub channel with the impulse response $\tilde{h}_{2,2}(\tau,t)$ (signal $\tilde{r}_{2,2}(i)$) with the first receiver antenna (signal $\tilde{r}_1(i)$).

For connecting the second transmitter antenna with the second receiver antenna the transmitter network A connects the second transmitter antenna (signal $s_2(i)$) with the input of the sub channel with the impulse response $\tilde{h}_{3,3}$ $(\tau,t)$ (signal $\tilde{s}_{3,3}(i)$) and the receiver network B connects the output of the sub channel with the impulse response $\tilde{h}_{3,3}(\tau, t)$ (signal $\tilde{r}_{3,3}(i)$) with the second receiver antenna (signal $\tilde{r}_2(i)$).

Furthermore, several configurations not shown in Fig. 6 between each of the two transmitter antennas and each of the two receiver antennas are also possible.

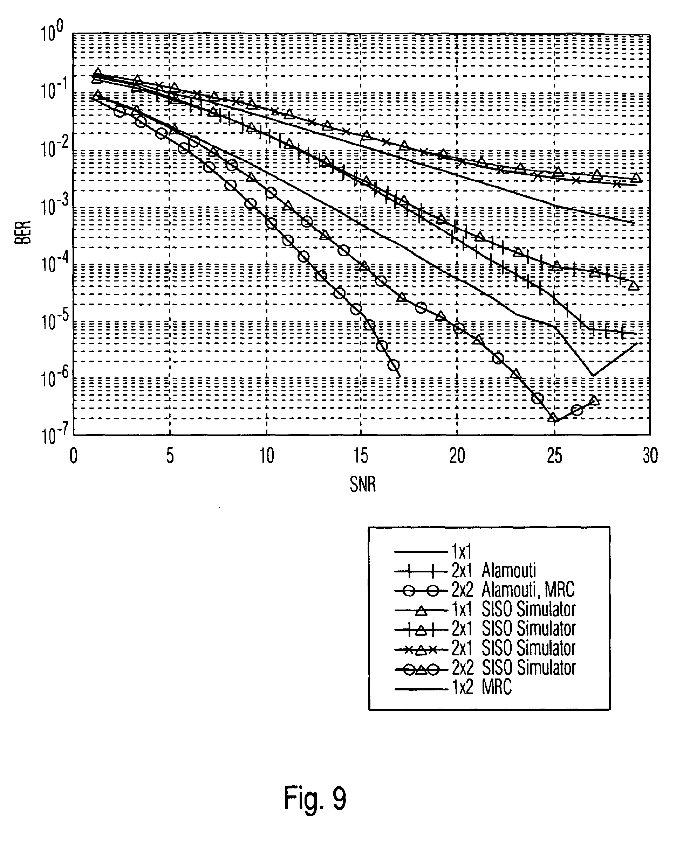

In Fig. 9 the BER over SNR is shown for different mobile radio systems with the real time simulator of state of the art in comparison with the first embodiment of the inventive real time simulator.

The BER-curve over SNR of the first embodiment of the inventive simulator for a 2x2 mobile radio system (line with circles and triangles in Fig. 9) has a smaller slope than the simulator for a 2x2 mobile radio system of state of the art (line with circles in Fig. 9). For a BER of $10^{-3}$ the error between the inventive simulator and the simulator of state of the art is about 1,8 dB.

As a result of dispatching one of four SISO sub channels in the first embodiment of the invention is that three connection between each of the two transmitter antennas and each of the two receiver antennas are fully uncorrelated and the fourth connection is correlated with one of the three fully uncorrelated connections.

To overcome this drawback in a second embodiment of the invention shown in Fig. 7 two of the three SISO sub channels operate parallel between one of the two transmitter antennas and one of the two receiver antennas. In total there are six transmission channels each with a different impulse response $\tilde{h}_{1,1}(\tau, t)$, $\tilde{h}_{2,2}(\tau, t)$, $\tilde{h}_{3,3}(\tau,t)$, $\tilde{h}_{1,1}(\tau,t)$ $+\tilde{h}_{2,2}(\tau,t)$, $\tilde{h}_{1,1}(\tau,t)+\tilde{h}_{3,3}(\tau,t)$ and $\tilde{h}_{2,2}(\tau,t)+\tilde{h}_{3,3}(\tau,t)$. Therefore the signals transmitted from each of the two transmitter antennas to each of the two receiver antennas over these six transmission channels are less correlated than the transmitted signals in the first embodiment of the invention.

In the transmitter network A of the second embodiment of the real time simulator in Fig. 7 the first transmitter antenna (signal $s_1(i)$) is connected to the input of the SISO sub channel with the impulse response $\tilde{h}_{1,1}(\tau,t)$ (signal $\tilde{s}_{1,1}(i)$) and to the input of the SISO sub channel with the impulse response $\tilde{h}_{2,2}(\tau,t)$ (signal $\tilde{s}_{2,2}(i)$) (uninterrupted lines). The corresponding outputs of the two SISO sub channels with the impulse responses $\tilde{h}_{1,1}(\tau,t)$ and $\tilde{h}_{2,1}(\tau,t)$ (signals $\tilde{s}_{1,1}(i)$ and $\tilde{s}_{2,2}(i)$) are connected to the first receiver antenna (signal $\hat{r}_1(i)$) (uninterrupted lines).

The first transmitter antenna (signal $s_1(i)$) is connected to the second receiver antenna (signal $\hat{r}_2(i)$) by connecting the first transmitter antenna (signal $s_1(i)$) to the inputs of the sub channels with the impulse responses $\tilde{h}_{1,1}(\tau,t)$ and $\tilde{h}_{3,3}$ $(\tau,t)$ (signals $\tilde{s}_{2,2}(i)$ and $\tilde{s}_{3,3}(i)$) by means of transmitter network A and by connecting the corresponding outputs of these sub channels (signals $\tilde{r}_{1,1}(i)$ and $\tilde{r}_{3,3}(i)$) to the second receiver antenna (signal $\tilde{r}_2(i)$) by means of the receiver network B (dashed lines).

The second transmitter antenna (signal $s_2(i)$) is connected to the first receiver antenna (signal $\hat{r}_1(i)$) by connecting the second transmitter antenna (signal $s_2(i)$) to the inputs of the sub channels with the impulse responses $\tilde{h}_{1,1}(\tau,t)$ and $\tilde{h}_{3,3}(\tau,t)$ (signals $\tilde{s}_{1,1}(i)$ and $\tilde{s}_{3,3}(i)$) by means of transmitter network A and by connecting the corresponding outputs of these sub channels (signals $\tilde{r}_{1,1}(i)$ and $\tilde{r}_{3,3}(i)$) to the first receiver antenna (signal $\tilde{r}_1(i)$) by means of the receiver network B (dotted lines).

The second transmitter antenna (signal $s_2(i)$) is connected to the second receiver antenna (signal $\tilde{r}_2(i)$) by connecting the second transmitter antenna (signal $s_2(i)$) to the inputs of the sub channels with the impulse responses $\tilde{h}_{2,2}(\tau,t)$ and $\tilde{h}_{3,3}(\tau,t)$ (signals $\tilde{s}_{2,2}(i)$ and $\tilde{s}_{3,3}(i)$) by means of transmitter network A and by connecting the corresponding outputs of these sub channels (signals $\tilde{r}_{2,2}(i)$ and $\tilde{r}_{3,3}(i)$) to the second receiver antenna (signal $\tilde{r}_2(i)$) by means of the receiver network B (crossed lines).

In analogy to the first embodiment of the invention several configurations not displayed in Fig. 7 are also possible for inventively connecting one of the two transmitter antennas to one of the two receiver antennas by combining two of the sub channels in a parallel structure.

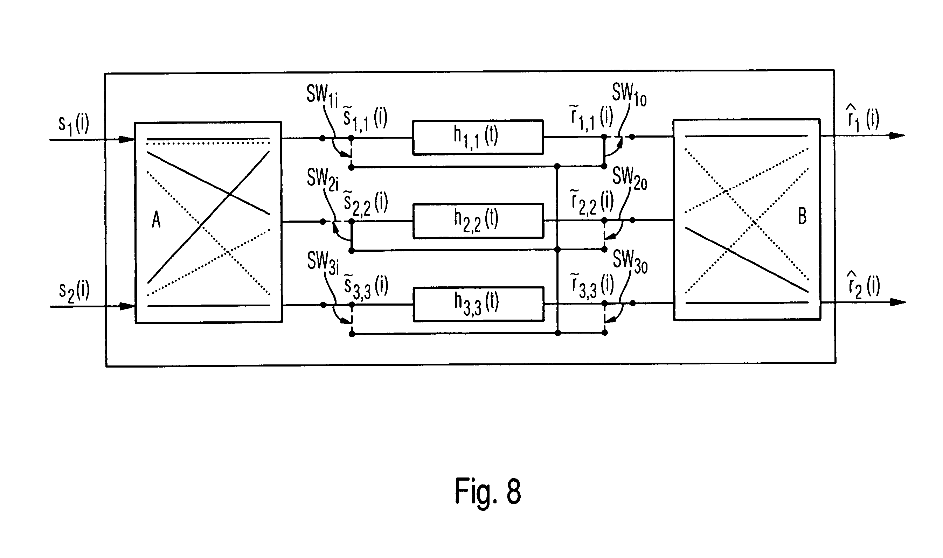

By inventively connecting the three SISO sub channels with the impulse responses $\tilde{h}_{1,1}(\tau,t)$, $\tilde{h}_{2,2}(\tau,t)$, $\tilde{h}_{3,3}(\tau,t)$ in a serial structure corresponding to a third embodiment of the invention in Fig. 8 in total seven transmission channels with their different impulse responses $\tilde{h}_{1,1}(\tau,t)$, $\tilde{h}_{2,2}(\tau,t)$, $\tilde{h}_{3,3}(\tau,t)$, $\tilde{h}_{1,1}(\tau,t)*\tilde{h}_{2,2}(\tau,t)$, $\tilde{h}_{1,1}(\tau,t)*\tilde{h}_{3,3}(\tau,t)$ $\tilde{h}_{2,2}(\tau,t)*\tilde{h}_{3,3}(\tau,t)$, $h_{1,1}(\tau,t)*\tilde{h}_{2,2}(\tau,t)*\tilde{h}_{3,3}(\tau,t)$ can be configured. The signal transmitted over each of these transmission channels are less correlated than the transmitted signals in the second embodiment of the invention in Fig. 7. The order of the serial connection of these three SISO sub channels with their impulse responses $\tilde{h}_{1,1}(\tau,t)$, $\tilde{h}_{2,2}(\tau,t)$ and $\tilde{h}_{3,3}(\tau,t)$ is not relevant for the correlation of the signals transmitted over the serial connection of these SISO sub channels, because the convolution of the impulse responses $\tilde{h}_{1,1}(\tau,t)$, $\tilde{h}_{2,2}(\tau,t)$ and $\tilde{h}_{3,3}(\tau,t)$ is commutative (for example $\tilde{h}_{1,1}(\tau,t)*\tilde{h}_{2,2}(\tau,t)=\tilde{h}_{2,2}(\tau,t)*\tilde{h}_{1,1}(\tau,t)$).

In the third embodiment of the invention the first transmitter antenna (signal $s_1(i)$) is connected to the second receiver antenna (signal $\tilde{r}_2(i)$) by serial concatenation of the SISO sub channels with the impulse responses $\tilde{h}_{1,1}(\tau,t)$ and $\tilde{h}_{2,2}(\tau,t)$. The first transmitter antenna (signal $s_1(i)$) is connected via the configured connection of the transmitter network A and the switch $SW_{1i}$ to the input of the SISO sub channel with the impulse response $\tilde{h}_{1,1}(\tau,t)$ (signal $\tilde{s}1,1(i)$ ). The output of the SISO sub channel with the impulse response $\tilde{h}_{1,1}(\tau,t)$ is connected via the switches $SW_{1o}$ and $SW_{2i}$

to the input of the SISO sub channel with the impulse response $\tilde{h}_{2,2}(\tau,t)$. The output of the SISO sub channel with the impulse response $\tilde{h}_{2,2}(\tau,t)$ is connected via the switch $SW_{2o}$ and the configured connection of the receiver network B to the second receiver antenna (signal $\hat{r}_2(i)$).

The second transmitter antenna (signal $s_2(i)$) is connected to the second receiver antenna (signal $\hat{r}_2(i)$) by means of the SISO sub channel with the impulse response $\tilde{h}_{3,3}(\tau,t)$. Therefore the second transmitter antenna (signal $s_2(i)$) is connected via the configured connection of the transmitter network A and the switch $SW_{3i}$ to the input of the SISO sub channel with the impulse response $\tilde{h}_{3,3}(\tau,t)$ and the output of the SISO sub channel with the impulse response $\tilde{h}_{3,3}(\tau,t)$ is connected to the second receiver antenna (signal $\hat{r}_2(i)$) via the switch $SW_{3o}$ and the configured connection of the receiver network B with the second receiver antenna (signal $\hat{r}_2(i)$).

With other configurations of the switches $SW_{1i}$, $SW_{1o}$, $SW_{2i}$, $SW_{2o}$, $SW_{3i}$ and $SW_{3o}$ not shown in Fig. 8 other serial concatenations of the SISO sub channels with the impulse responses $\tilde{h}_{1,1}(\tau,t)$ , $\tilde{h}_{2,2}(\tau,t)$ and $\tilde{h}_{3,3}(\tau,t)$ are possible. By configuring suitable connections in the transmitter network A and in the receiver network B each of the two transmitter antennas can be connected to the input of such a serial concatenation of several SISO sub channels and by configuring suitable connections in the receiver network B the output of such a serial concatenation of several SISO sub channels can be connected to each of the two receiver antennas.

Combining the second embodiment with the third embodiment of the invention a fourth embodiment of the invention not shown in the drawing can be realised. In the fourth embodiment of the invention SISO sub channels can be connected in serial and parallel structures (for example a serial concatenation of the SISO sub channel with the impulse response $\tilde{h}_{1,1}(\tau,t)$ and of a parallel concatenation of the SISO sub channels with the impulse responses $\tilde{h}_{2,2}(\tau, t)$ and $\tilde{h}_{3,3}(\tau,t)$).

In the inventive method for simulating in real time at least one channel in a multiple-input-multiple-output (MIMO) mobile radio system a multiplication of a transmitter matrix A, of a diagonal matrix containing the impulse responses $\tilde{h}_{v,\mu}(\tau,t)$ of in total $\tilde{D}$ SISO sub channels and of a receiver matrix B is performed.

The transmitter matrix A represents a configuration matrix describing the connections between the N transmitter antennas and the inputs of the $\tilde{D}$ SISO sub channels, whereby such a element of the transmitter matrix A is set - value of the corresponding element equals 1 - , which represents an existing connection between one transmitter antenna i and one input of the $\tilde{D}$ SISO sub channels, and such a element of the transmitter matrix A is reset - value of the corresponding element equals 0 - , which represents an not existing connection between one transmitter antenna i and one input of the $\tilde{D}$ SISO sub channels. The setting of the elements of the transmitter matrix A for the uninterrupted connections between the two transmitter antennas i and the inputs of the three SISO sub channels in the first embodiment of the inventive simulator in Fig. 6 corresponds to equation (7).

$$A = \begin{pmatrix} 1 & 1 & 0 \\ 0 & 0 & 1 \end{pmatrix} \qquad (7)$$

The diagonal matrix $\tilde{H}(\tau,t)$ containing the impulse responses $\tilde{h}_{v,\mu}(\tau,t)$ of in total 3 SISO sub channels of the first embodiment of the inventive simulator in Fig. 6 corresponds to equation (8).

$$\tilde{H}(\tau,t) = \begin{pmatrix} \tilde{h}_{1,1}(\tau,t) & 0 & 0 \\ 0 & \tilde{h}_{2,2}(\tau,t) & 0 \\ 0 & 0 & \tilde{h}_{3,3}(\tau,t) \end{pmatrix} \qquad (8)$$

The receiver matrix B represents a configuration matrix describing the connections between the outputs of the $\tilde{D}$ SISO sub channels and the M receiver antennas j , whereby such a element of the receiver matrix B is set - value of the corresponding element equals 1 - , which represents an existing connection between one output of the $\tilde{D}$ SISO sub channels and one receiver antenna j, and such a element of the receiver matrix B is reset - value of the corresponding element equals 0 - , which represents an not existing connection between one output of the $\tilde{D}$ SISO sub channels and one receiver antenna j. The setting of the elements of the receiver matrix B for the uninterrupted connections between the outputs of the three SISO sub channels and the two receiver antennas j in the first embodiment of the inventive simulator in Fig. 6 corresponds to equation (9).

$$B = \begin{pmatrix} 1 & 0 \\ 0 & 1 \\ 0 & 1 \end{pmatrix} \qquad\qquad (9)$$

The channel matrix $H(\tau,t)$ for simulating a 2x2 mobile radio system with a reduced number $\tilde{D}$ of three SISO sub channels is inventively determined by multiplication of transmitter matrix A, diagonal matrix $\tilde{H}(\tau,t)$ and receiver matrix B corresponding to equation (10).

$$H(\tau,t) = \begin{pmatrix} 1 & 1 & 0 \\ 0 & 0 & 1 \end{pmatrix} \cdot \begin{pmatrix} \tilde{h}_{1,1}(\tau,t) & 0 & 0 \\ 0 & \tilde{h}_{2,2}(\tau,t) & 0 \\ 0 & 0 & \tilde{h}_{3,3}(\tau,t) \end{pmatrix} \cdot \begin{pmatrix} 1 & 0 \\ 0 & 1 \\ 0 & 1 \end{pmatrix}$$

$$= \begin{pmatrix} \tilde{h}_{1,1}(\tau,t) & \tilde{h}_{2,2}(\tau,t) \\ 0 & \tilde{h}_{3,3}(\tau,t) \end{pmatrix} \qquad\qquad (10)$$

The invention is not limited to the 2x2 MIMO mobile radio systems outlined in the first, second and third embodiment in Fig. 6, 7 and 8. The inventive principle of the concatenation of the transmitter network A, of the SISO sub channels and of the receiver network B can be extended to NxM mobile radio systems.

## Claims

1. Test system for testing and simulating in real time at least one channel in a multiple-input-multiple-output (MIMO) mobile radio system with N transmitter antennas (i), M receiver antennas (j) and N·M possible channels connecting each of said N transmitter antennas (i) with each of said M receiver antennas (j) using a test and simulation model with decoupled single-input-single-output (SISO) channels comprising:

   a transmitter network (A) connecting each of said N transmitter antennas (i) with an input of at least one of said decoupled single-input-single-output (SISO) channels, a diagonal channel matrix ($\tilde{H}$) achieved by singular value decomposition of a channel matrix (H) between each transmitter antenna (i) and each receiver antenna (J) and a receiver network (B) connecting the output of each of said N·M decoupled single-input-single-output (SISO) channels with one of said M receiver antennas (j), wherein said test and simulation model contains a reduced number ($\tilde{D}$) of all possible N·M decoupled single-input-single-output (SISO) channels.

2. Test system according to claim 1, wherein said reduced number ($\tilde{D}$) of said decoupled single-input-single-output (SISO) channels in said simulation model is said number N·M of all possible connections between each transmitter antenna (i) and each receiver antenna (j) decremented by 1.

3. Test system according to claim 1 or 2, wherein a connection between a transmitter antenna (i) and a receiver antenna (j) by means of a decoupled single-input-single-output (SISO) channel (k), which is not used in said test and simulation model due to reduction of said N·M decoupled single-input-single-output (SISO) channels, is replaced by means of at least one of the other decoupled single-input-single-output (SISO) channels (1,..,k-1,k+1..,N·M).

4. Test system according to claim 3, wherein said other decoupled single-input-single-output (SISO) channels (1,..,k-1,k+1,..,N·M) are connected parallel to each other.

5. Test system according to claim 3,

wherein said other decoupled single-input-single-output (SISO) channels (1,..,k-1,k+1,..,N·M) are connected serial to each other.

6. Test system according to claim 5,
   wherein
   said serial connection of said other decoupled single-input-single-output (SISO) channels (1,..,k-1,k+1,..,N·M) is realised by means of switches ($SW_{1i}$, $SW_{1o}$, $SW_{2i}$, $SW_{2o}$, $SW_{3i}$, $SW_{3o}$'...).

7. Test system according to any of claims 3 to 6, wherein said connection between said transmitter antenna (i) and said non-used decoupled channel (k) in said transmitter network (A) is dispatched and replaced by at least one connection between said transmitter antenna (i) and at least one of said other decoupled channels (1,..,k-1,k+1,.., N·M) in said transmitter network (A).

8. Test system according to any of claims 3 to 7, wherein said connection between said non-used decoupled channel (k) and said receiver antenna (j) in said receiver network (B) is dispatched and replaced by at least one connection between at least one of said other decoupled channels (1,..,k-1,k+1,..,N·M) and said receiver antenna (j) in said receiver network (B).

9. Test system according to any of claims 1 to 8, wherein said transmitter network (A) and said receiver network (B) are invariant in time.

10. Method for testing and simulating in real time at least one channel in a multiple-input-multiple-output (MIMO) mobile radio system with N transmitter antennas (i), M receiver antennas (j) and N·M possible channels connecting each of said N transmitter antennas (i) with each of said M receiver antennas (j) by multiplying a transmitter matrix (A) with the connections between each of said N transmitter antennas (i) and at least one of said decoupled single-input-single-output (SISO) channels, a diagonal matrix ($\tilde{H}$) with each of said decoupled single-input-single-output (SISO) channels achieved by singular value decomposition of a channel matrix (H) between each transmitter antenna (j) and each receiver antenna (j), and a receiver matrix (B) with the connections between each of said N·M decoupled single-input-single-output (SISO) channels and one of said M receiver antennas (j), wherein said diagonal matrix ($\tilde{H}$) contains a reduced number ($\tilde{D}$) of all possible N·M decoupled single-input-single-output (SISO) channels.

11. Method for testing and simulating according to claim 9,
    wherein said reduced number ($\tilde{D}$) of said N·M decoupled single-input-single-output (SISO) channels in said diagonal matrix is said number N·M of connections between each of said transmitter antenna (i) and each of said receiver antenna (j) decremented by 1.

12. Method for testing and simulating according to claim 10 or 11,
    wherein said transmitter matrix (A) and said receiver matrix (B) are invariant in time.

**Patentansprüche**

1. Testsystem für Test und Simulation mindestens eines Kanals in Echtzeit in einem Multiple-Input-Multiple-Output-(MIMO-)Mobilfunksystem mit N Sendeantennen (i), M Empfangsantennen (j) und N·M möglichen Kanälen, welche jede der N Sendeantennen (i) mit jeder der M Empfangsantennen (j) verbinden, mittels eines Test- und Simulationsmodells mit entkoppelten Single-Input-Single-Output-(SISO-)Kanälen, wobei das Testsystem aufweist:

   ein Sendernetz (A), das jede der N Sendeantennen (i) mit einem Eingangssignal von mindestens einem der entkoppelten Single-Input-Single-Output-(SISO-)Kanäle verbindet, eine diagonale Kanalmatrix ($\tilde{H}$), die man durch eine singuläre Wertezerlegung einer Kanalmatrix (H) zwischen jeder Sendeantenne (i) und jeder Empfangantenne (j) erhält, und ein Empfängernetz (B), welches das Ausgangssignal jedes der N·M entkoppelten Single-Input-Single-Output-(SISO-) Kanäle mit einer der M Empfangsantennen (j) verbindet, wobei das Test- und Simulationsmodell eine verringerte Anzahl ($\tilde{D}$) aller möglichen N·M entkoppelten Single-Input-Single-Output-(SISO-)Kanäle enthält.

2. Testsystem nach Anspruch 1,
   wobei die verringerte Anzahl ($\tilde{D}$) der entkoppelten Single-Input-Single-Output-(SISO-)Kanäle im Simulationsmodell der um 1 verminderten Anzahl der N·M möglichen Verbindungen zwischen jeder Sendeantenne (i) und jeder Empfangsantenne (j) entspricht.

3. Testsystem nach Anspruch 1 oder 2,
   wobei eine Verbindung zwischen einer Sendeantenne (i) und einer Empfangsantenne (j) mittels eines entkoppelten Single-Input-Single-Output-(SISO-)Kanals (k), der im Test- und Simulationsmodell wegen der Verringerung der N·M entkoppelten Single-Input-Single-Output-(SISO-)Kanäle nicht verwendet wird, durch mindestens einen der anderen entkoppelten Single-Input-Single-Output-(SISO-)Kanäle (1,.., k-1, k+1,.., N·M) ersetzt wird.

4. Testsystem nach Anspruch 3,
   wobei die anderen Single-Input-Single-Output-(SISO-)Kanäle (1,.., k-1, k+1,.., N·M) parallel miteinander verbunden sind.

5. Testsystem nach Anspruch 3,
   wobei die anderen Single-Input-Single-Output-(SISO-)Kanäle (1,.., k-1, k+1,.., N·M) seriell miteinander verbunden sind.

6. Testsystem nach Anspruch 5,
   wobei die serielle Verbindung der anderen Single-Input-Single-Output-(SISO-)Kanäle (1,..,k-1, k+1,.., N·M) mittels Schaltern ($SW_{1i}$, $SW_{1o}$, $SW_{2i}$, $SW_{2o}$, $SW_{3i}$, $SW_{3o}$,...) hergestellt wird.

7. Testsystem nach einem der Ansprüche 3 bis 6,
   wobei im Sendernetz (A) die Verbindung zwischen der Sendeantenne (i) und dem nicht verwendeten entkoppelten Kanal (k) ausgewählt und durch mindestens eine Verbindung zwischen der Sendeantenne (i) und mindestens einem der anderen entkoppelten Kanäle (1,.., k-1, k+1,.., N·M) im Sendernetz (A) ersetzt wird.

8. Testsystem nach einem der Ansprüche 3 bis 7,
   wobei im Empfängernetz (B) die Verbindung zwischen dem nicht verwendeten entkoppelten Kanal (k) und der Empfangsantenne (j) ausgewählt und durch mindestens eine Verbindung zwischen mindestens einem der anderen entkoppelten Kanäle (1,.., k-1, k+1,.., N·M) und der Empfangsantenne (j) im Empfängernetz (B) ersetzt wird.

9. Testsystem nach einem der Ansprüche 1 bis 8,
   wobei Sendernetz (A) und Empfängernetz (B) zeitinvariant sind.

10. Verfahren für Test und Simulation mindestens eines Kanals in Echtzeit in einem Multiple-Input-Multiple-Output-(MIMO-)Mobilfunksystem mit N Sendeantennen (i), M Empfangsantennen (j) und N·M möglichen Kanälen, welche jede der N Sendeantennen (i) mit jeder der M Empfangsantennen (j) verbinden, durch Multiplikation einer Sendermatrix (A) mit den Verbindungen zwischen jeder der N Sendeantennen (i) und mindestens einem der entkoppelten Single-Input-Single-Output-(SISO-)Kanäle, einer diagonalen Kanalmatrix ($\tilde{H}$), die man durch eine singuläre Wertezerlegung einer Kanalmatrix (H) zwischen jeder Sendeantenne (i) und jeder Empfangantenne (j) erhält, mit jedem der entkoppelten Single-Input-Single-Output-(SISO-)Kanäle, und einer Empfängermatrix (B) mit den Verbindungen zwischen jedem der N·M entkoppelten Single-Input-Single-Output-(SISO-) Kanäle und einer der M Empfangsantennen (j), wobei die diagonale Kanalmatrix ($\tilde{H}$) eine verringerte Anzahl ($\tilde{D}$) aller möglichen N'M entkoppelten Single-Input-Single-Output-(SISO-)Kanäle enthält.

11. Test- und Simulationsverfahren nach Anspruch 9,
    wobei die verringerte Anzahl ($\tilde{D}$) der N·M entkoppelten Single-Input-Single-Output-(SISO-)Kanäle in der diagonalen Kanalmatrix ($\tilde{H}$) der um 1 verminderten Anzahl N·M der Verbindungen zwischen jeder Sendeantenne (i) und jeder Empfangsantenne (j) entspricht.

12. Test- und Simulationsverfahren nach Anspruch 10 oder 11,
    wobei Sendermatrix (A) und Empfängermatrix (B) zeitinvariant sind.

**Revendications**

1. Système de test pour tester et simuler en temps réel au moins un canal dans un système de radio mobile à entrée multiple et sortie multiple (MIMO) avec N antennes d'émission (i), M antennes de récepteur (j) et N·M canaux possibles reliant chacune desdites N antennes d'émetteur (i) avec chacune desdites M antennes de récepteur (j) utilisant un modèle de test et de simulation avec des canaux à entrée unique et sortie unique découplés (SISO) comprenant :

un réseau d'émetteur (A) connectant chacune desdites N antennes d'émetteur (i) avec une entrée d'au moins un desdites canaux à entrée unique et sortie unique découplés (SISO), une matrice de canal diagonale ($\widetilde{H}$) obtenue par décomposition de valeur singulière d'une matrice de canal (H) entre chaque antenne d'émetteur (i) et chaque antenne de récepteur (j), et un réseau de récepteur (B) reliant la sortie de chacun desdits N·M canaux à entrée unique et sortie unique découplés (SISO) avec une desdites M antennes de récepteur (j), dans lequel ledit modèle de test et de simulation contient un nombre réduit ($\widetilde{D}$) de tous les N·M canaux à entrée unique et sortie unique découplés uniques possibles (SISO).

2. Système de test selon la revendication 1,
dans lequel ledit nombre réduit ($\widetilde{D}$) desdits canaux à entrée unique et sortie unique découplés (SISO) dans ledit modèle de simulation est ledit nombre N·M de toutes les connexions possibles entre chaque antenne d'émetteur (i) et chaque antenne de récepteur (j) décrémentées de 1.

3. Système de test selon la revendication 1 ou la revendication 2,
dans lequel une connexion entre une antenne d'émetteur (i) et une antenne de récepteur (j) au moyen d'un canal à entrée unique et à sortie unique découplé (SISO) (k), qui n'est pas utilisée dans ledit modèle de test et de simulation dû à une réduction desdits N·M canaux à entrée unique et à sortie unique découplés (SISO), est remplacée au moyen d'au moins un des autres canaux à entrée unique et à sortie unique découplés (SISO) (1,..,k-1,k+1,..,N·M).

4. Système de test selon la revendication 3,
dans lequel lesdites autres canaux à entrée unique et à sortie unique découplés (SISO) (1,..,k-1,k+1,..,N·M) sont reliés en parallèle les uns par rapport aux autres.

5. Système de test selon la revendication 3,
dans lequel lesdits autres canaux à entrée unique et à sortie unique découplés (SISO) (1,..,k-1,k+1,..,N·M) sont reliés en série les uns avec les autres.

6. Système de test selon la revendication 5,
dans lequel
ladite connexion en série desdits autres canaux à entrée unique et à sortie unique découplés (SISO) est réalisée au moyen de commutateurs ($SW_{1i}$, $SW_{1o}$, $SW_{2i}$, $SW_{2o}$, $SW_{3i}$, $SW_{3o}$,...).

7. Système de test selon l'une quelconque des revendications 3 à 6,
dans lequel ladite connexion entre ladite antenne d'émission (i) et ledit canal découplé non utilisé (k) dans ledit réseau d'émetteur (A) est délivrée et remplacée par au moins une connexion entre ladite antenne d'émetteur (i) et au moins un desdits autres canaux découplés (1,..,k-1,k+1,..,N·M) dans ledit réseau d'émetteur (A).

8. Système de test selon l'une quelconque des revendications 3 à 7, dans lequel ladite connexion entre ledit canal découplé non utilisé (k) et ladite antenne de récepteur (j) dans ledit réseau de récepteur (B) est délivrée et remplacée par au moins une connexion entre au moins un desdits autres canaux découplés (1,..,k-1,k+1,..,N·M) et ladite antenne de récepteur (j) dans ledit réseau de récepteur (B).

9. Système de test selon l'une quelconque des revendications 1 à 8, dans lequel ledit réseau d'émetteur (A) et ledit réseau de récepteur (B) sont invariants dans le temps.

10. Procédé pour tester et simuler en temps réel sur au moins un canal dans un système de radio mobile à entrée multiple et à sortie multiple (MIMO) avec N antennes d'émetteur (i), M antennes de récepteur (j) et N·M canaux possibles reliant chacune desdites N antennes d'émetteur (i) à chacune desdites M antennes de récepteur (j) en multipliant une matrice d'émetteur (A) avec les connexions entre chacune desdites N antennes d'émetteur (i) et au moins un desdits canaux à entrée multiple et à sortie multiple découplés (SISO), une matrice diagonale ($\widetilde{H}$) avec chacun desdits canaux à entrée multiple et à sortie multiple découplés (SISO) obtenue par une décomposition de valeur singulière d'une matrice de canal (H) entre chaque antenne d'émetteur (i) et chaque antenne de récepteur (j), et une matrice de récepteur (B) avec les connexions entre chacun desdits N·M canaux à entrée unique et à sortie unique découplés (SISO) et une desdites M antennes de récepteur (j), dans lequel ladite matrice diagonale ($\widetilde{H}$) contient un nombre réduit ($\widetilde{D}$) de tous les N·M canaux à entrée unique et à sortie unique découplés (SISO) possibles.

11. Procédé pour tester et simuler selon la revendication 9,
dans lequel le nombre réduit ($\tilde{D}$) desdits N·M canaux à entrée unique et à sortie unique découplés (SISO) dans ladite matrice diagonale est ledit nombre N·M de connexions entre chacune desdites antennes d'émetteur (i) et chacune desdites antennes de récepteur (j) décrémenté de 1.

12. Procédé pour tester et simuler selon la revendication 10 ou 11,
dans lequel ladite matrice d'émetteur (A) et ladite matrice de récepteur (B) sont invariants dans le temps.

Fig. 1

Kanal: UMTS MIMO Model

Fig. 2

Fig. 3

Fig. 4

Fig. 5

EP 1 858 180 B1

**Fig. 6**

$s_1(i)$ → [A] → $\tilde{s}_{1,1}(i)$ → $h_{1,1}(i)$ → $\tilde{r}_{1,1}(i)$ → [B] → $\hat{r}_1(i)$

$\tilde{s}_{2,2}(i)$ → $h_{2,2}(i)$ → $\tilde{r}_{2,2}(i)$

$s_2(i)$ → $\tilde{s}_{3,3}(i)$ → $h_{3,3}(i)$ → $\tilde{r}_{3,3}(i)$ → $\hat{r}_2(i)$

**Fig. 7**

$s_1(i)$ → [A] → $\tilde{s}_{1,1}(i)$ → $h_{1,1}(i)$ → $\tilde{r}_{1,1}(i)$ → [B] → $\hat{r}_1(i)$

$\tilde{s}_{2,2}(i)$ → $h_{2,2}(i)$ → $\tilde{r}_{2,2}(i)$

$s_2(i)$ → $\tilde{s}_{3,3}(i)$ → $h_{3,3}(i)$ → $\tilde{r}_{3,3}(i)$ → $\hat{r}_2(i)$

Fig. 8

EP 1 858 180 B1

Fig. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 03005606 A1

- WO 06026799 A1

**Non-patent literature cited in the description**

- **ALAMOUTI, S.M.** A Simple Transmit Diversity Technique for Wireless Communications. *IEEE Journal on Selected Areas in Communications,* October 1998, vol. 16 (8), 1451-1458